# EUROPÄISCHE PATENTSCHRIFT

(11) **EP 1 135 429 B1**
(45) Veröffentlichungstag und Bekanntmachung des Hinweises auf die Patenterteilung: **23.04.2003**
(21) Anmeldenummer: 99958045.9
(22) Anmeldetag: 16.11.1999
(51) Int. Cl.: C08J 3/03, C08G 18/08, C08G 59/00

(54) **POLYADDITIONEN IN WÄSSRIGEN UND NICHTWÄSSRIGEN MINIEMULSIONEN**
POLYADDITIONS IN AQUEOUS AND NON-AQUEOUS MINI-EMULSIONS
POLYADDITIONS DANS LES MINI-EMULSIONS AQUEUSES ET NON AQUEUSES

(30) Priorität: 16.11.1998 DE 19852784; 22.07.1999 DE 19934519
(43) Veröffentlichungstag der Anmeldung: 26.09.2001
(73) Patentinhaber: Max-Planck-Gesellschaft zur Förderung der Wissenschaften e.V., 80539 München (DE)
(72) Erfinder: ANTONIETTI, Markus, D-14558 Bergholz-Rehbrücke (DE); LANDFESTER, Katharina, D-14482 Potsdam (DE); TIARKS, Franca, D-14050 Berlin (DE); BECHTHOLD, Nina, D-14476 Golm (DE); WILLERT, Mirjam, D-13589 Berlin (DE)
(74) Vertreter: Dey, Michael, Dr.
(86) Internationale Anmeldenummer: EP9908789
(87) Internationale Veröffentlichungsnummer: WO00029465

(56) Entgegenhaltungen:
- EP-A- 0 509 494
- EP-A- 0 568 976
- EP-A- 0 685 544
- WO-A-98/41552
- US-A- 4 104 223
- US-A- 4 517 245
- US-A- 5 686 518
- MOURAN ET AL: "Miniemulsion Polymerization of Methyl Methacrylate with Dodecyl Mercaptan as Cosurfactant" JOURNAL OF POLYMER SCIENCE. PART A, Bd. 34, 1996, Seiten 1073-1081, XP002128608

## Beschreibung

Die Erfindung betrifft ein Verfahren zur Durchführung von Polyadditionsreaktionen in Miniemulsionen.

Die Miniemulsionspolymerisation ist ein neuartiges Verfahren der Heterophasenpolymerisation, welches das Einsatzgebiet der klassischen Emulsionspolymerisation erweitert. Miniemulsionen sind Dispersionen aus einer wässrigen Phase, einer Ölphase und gegebenenfalls einem oder mehreren oberflächenaktiven Tensiden, bei denen ungewöhnlich kleine Tröpfchengrößen realisiert werden. Bei Polymerisationsreaktionen in Miniemulsionen wird üblicherweise ein unpolares Monomer oder ein Gemisch von Monomeren und gegebenenfalls einem Cosurfactant in Wasser mit Hilfe eines Tensids und unter Einsatz hoher Scherfelder zu Tröpfchen in der gewünschten Größenordnung dispergiert, die durch das zugesetzte Tensid kolloidal stabilisiert werden (Sudol und EI-Aasser, in: Emulsion Polymerization and Emulsion Polymers; Lovell, P.A; El-Aasser, M.S., Hrsg., Chichester (1997), 699). Bei derartigen Miniemulsionen kann die Tröpfchengröße aufgrund von Kollisionen und Fusionen noch anwachsen.

Die deutsche Patentanmeldung 198 52 784.5-43 beschreibt die osmotische Stabilisierung von Mini- und Mikroemulsionen durch Verwendung von wasserunlöslichen Verbindungen als emulsionsstabilisierende Komponente. Durch Zusatz der wasserunlöslichen Substanz zur Ölphase, die üblicherweise die disperse Phase der Emulsion ist, wird ein osmotischer Druck aufgebaut, der dem durch die Oberflächenspannung der Emulsionströpfchen aufgebauten Kapillar- oder Kelvin-Druck entgegenwirkt. Dies hat zur Folge, daß eine Ostwald-Reifung der Emulsionströpfchen verzögert oder vermieden wird.

Eine Herstellung von Polyadditionsprodukten durch Heterophasentechniken wurde bisher noch nicht beschrieben. Auf dem Markt sind zwar bereits wässrige Polyurethan- bzw. Polyepoxid-Dispersionen erhältlich. Diese werden jedoch in einer verfahrenstechnisch aufwendigen Weise als Sekundärdispersionen hergestellt, und zwar durch Kondensation des Polyurethans oder Polyepoxide in einem organischen Lösungsmittel, Eintrag in Wasser, anschließendes Entfernen des organischen Lösungsmittels. Andere wässrige Polyurethane enthalten gut wasserlösliche Amine und sind damit zumindest partiell selbst wasserlöslich, stellen also im strengen Sinne keine Dispersion dar.

Überraschenderweise wurde gefunden, daß Polyadditionen in Miniemulsionen unter Erhalt des partikulären Charakters durchgeführt werden können. Dabei werden die zur Polyaddition verwendeten Edukte, z.B. Diamine und Diepoxide zur Herstellung von Polyepoxid-Dispersionen oder Diisocyanate und Diamine oder/und Dialkohole zur Herstellung von Polyurethan- oder/und Polyharnstoff-Dispersionen in einem geeigneten Dispergiermedium vorzugsweise mit Hilfe eines oberflächenaktiven Tensids und gegebenenfalls einer oder mehreren wasserunlöslichen Substanzen dispergiert und z.B. durch Zugabe eines Katalysators oder/und durch Temperaturerhöhung zur Reaktion gebracht. Auf diese Weise entsteht direkt die gewünschte Polymerdispersion. Durch Variation der Stöchiometrie zwischen beiden Reaktionspartnern sind auch funktionelle Polymere, funktionelle Partikel, bzw. durch Zugabe von Vernetzungsmitteln auch funktionelle Mikrogele zugänglich. Der Einsatz solcher Dispersionen ist in allen Bereichen möglich, in denen jetzt bereits wässrige Polyepoxid- bzw. Polyurethandispersionen verwendet werden, d.h. insbesondere bei Klebstoffen, Deckanstrichen und Lacken.

Ein Gegenstand der vorliegenden Erfindung ist ein Verfahren zur Durchführung von Polyadditionsreaktionen in Miniemulsionen, welches dadurch gekennzeichnet ist, dass man eine die monomeren Edukte der Polyadditionsreaktionen enthaltende Miniemulsion mit Emulsionströpfchen mit einem mittleren Teilchendurchmesser von 20 bis 1000 nm in einem hydrophilen fluiden Medium erzeugt und dann zur Reaktion bringt, wobei eine Dispersion von Partikeln des Polyadditionsprodukts im Medium erhalten wird.

Polyadditionen im Sinne der vorliegenden Erfindung sind ohne Abspaltung von Nebenprodukten in Stufen verlaufende Polyreaktionen, bei denen durch vielfach wiederholte Addition von di- oder polyfunktionellen Edukten in unabhängigen Einzelreaktionen (Stufenreaktionen) über die Bildung von reaktiven Oligomeren als diskrete Zwischenstufen Polyadditionsprodukte aufgebaut werden. Dazu gehören sowohl Unipolyadditionsreaktionen, bei denen man von zwei Monomertypen ausgeht, als auch Copolyadditionsreaktionen, bei denen mehr als zwei unterschiedliche Monomertypen eingesetzt werden. Bevorzugte Beispiele für Polyadditionsreaktionen ist die Herstellung von Polyurethanen ausmultifunktionellen Hydroxyverbindungen und multifunktionellen Isocyanaten, die Herstellung von Polyharnstoffen aus multifunktionellen Aminen und multifunktionellen Isocyanaten und die Herstellung von Polyepoxiden aus multifunktionellen Epoxiden und multifunktionellen Aminen, Thiolen oder/und Hydroxyverbindungen.

Die Miniemulsion, in der die Polyadditionsreaktion durchgeführt wird, kann durch Anwendung hoher Scherfelder, z.B. durch einen Ultraschallstab, einen Strahldispergator oder einen Mikrofluidizer eingestellt werden. Die Emulsionströpfchen liegen in der Größenordnung von 20 bis 1000 nm, insbesondere von 30 nm bis 600 nm mittlerer Teilchendurchmesser. Vorzugsweise wird eine Miniemulsion einer Ölphase in einer im wesentlichen damit nicht mischbaren hydrophilen Phase, z.B. einer polaren organischen Phase, insbesondere jedoch einer wässrigen Phase gebildet.

Zur Stabilisierung der Emulsion werden vorzugsweise oberflächenaktive Tenside wie etwa Natriumdodecylsulfat, Cetyltrimethylammoniumchlorid oder auch polymere Tenside, wie z.B. Blockcopolymere von Styrol und Ethylenoxid zugesetzt. Die Tensidmenge liegt vorzugsweise im Bereich von 0,1 bis 20 Gew.-%, vorzugsweise 0,2 bis 10 Gew.-% und besonders bevorzugt 0,5 bis 5 Gew.-% bezogen auf das Gesamtgewicht der Emulsion.

Zur osmotischen Stabilisierung der Dispersion reicht in vielen Fällen das Vorhandensein einer hydrophoben Additionskomponente, d.h. eines der Edukte aus. Im Falle der Verwendung polarer, insbesondere wässriger Dispergiermedien können jedoch zusätzlich inerte, d.h. nicht bei der Polyadditionsreaktion beteiligte, im Dispergiermedium unlösliche ultrahydrophobe Verbindungen zugesetzt werden und zwar im allgemeinen in einer Menge von 0,1 und 40 Gew.-%, vorzugsweise 0,2 bis 10 Gew.-% und besonders bevorzugt 0,5 bis 5 Gew.-% bezogen auf das Gesamtgewicht der Emulsion.

Dabei sind insbesondere ultrahydrophobe Verbindungen geeignet, die sich mit der Ölphase vermischen und eine Löslichkeit im Dispergiermedium von vorzugsweise weniger als 5 x 10⁻⁵ g/l besonders bevorzugt weniger als 5 x 10⁻⁶ g/l und am meisten bevorzugt weniger als 5 x 10⁻⁷ g/l bei Raumtemperatur aufweisen. Beispiele hierfür sind Kohlenwasserstoffe, insbesondere volatile und gegebenenfalls halogenierte Kohlenwasserstoffe, Silane, Organosilane, Siloxane, langkettige Ester, Öle wie Pflanzenöle, z.B. Olivenöl, hydrophobe Farbstoffmoleküle, verkappte Isocyanate sowie oligomere Polymerisations-, Polykondensations- und Polyadditionsprodukte.

Die Tenside und ultrahydrophoben Verbindungen werden vorzugsweise so ausgewählt, daß sie mit dem resultierenden Polyadditionsprodukt kompatibel sind. So können Substanzen verwendet werden, die eine hohe Volatilität besitzen oder/und nützlicherweise bei einer evtl. Weiterverwendung der polymeren Dispersion zum Einsatz kommen, z.B. als Weichmacher, Farbstoff etc., so daß sie positiv zur Zielanwendung beitragen können. Durch Variation der Tenside oder/und der ultrahydrophoben Verbindungen bzw. deren Mengen im Reaktionsansatz kann die Teilchengröße der Emulsion sowie der resultierenden Polymer-Dispersion wunschgemäß eingestellt werden.

Die Polyadditionsreaktion in der Miniemulsion kann auf bekannte Weise ausgelöst werden, z.B. durch Zugabe eines Katalysators oder/und durch Temperaturerhöhung. Vorzugsweise geht man dabei von einer kritisch stabilisierten und besonders bevorzugt von einer thermodynamisch stabilen Emulsion aus. Bei derart osmotisch stabilisierten Emulsionen können Dispersionen des Polyadditionsprodukts erhalten werden, deren Teilchengröße sich gegenüber der Eduktemulsion nicht auf unerwünschte Weise geändert hat. Die Teilchen des Polyadditionsprodukts haben eine mittlere Größe von vorzugsweise 20 bis 1000 nm und besonders bevorzugt von 30 bis 600 nm.

Darüber hinaus eignet sich das erfindungsgemäße Verfahren auch zur Herstellung von mehrphasigen Nanohybridpartikeln, z.B. Partikeln, die Polyadditionsprodukte und darin verkapselte inerte Feststoffpartikel, z.B anorganische Materialien wie Metallkolloide, oxidische Partikel wie SiO₂, TiO₂, CaSO₄, CaCO₃, BaSO₄, Zeolithe, Eisenoxide, ZnO, CuO, CrO₂, ZrO₂, Fluor- und Hydroxyapatite und Feinruß, oder organische Materialien, wie kolloidale Farbstoffaggregate enthalten. Vorzugsweise werden Feststoffpartikel verkapselt, die eine hydrophobe oder eine hydrophobisierte Oberfläche aufweisen. Die Hydrophobisierung der Oberfläche kann durch Zugabe von Substanzen erfolgen, die eine Monoschicht auf den Feststoffpartikeln bilden, z.B. langkettigen Carbonsäuren. Weiterhin können auch Polyadditionsedukte oder - produkte (diese dann in geringen Mengen als Beimischung) zur Hydrophobisierung der oben genannten Partikel eingesetzt werden. Die Größe der Feststoffpartikel liegt im allgemeinen im Bereich von 0,5 bis 400 nm, vorzugsweise im Bereich von 1 bis 250 nm und besonders bevorzugt im Bereich von 10 nm bis 200 nm. Die Größe der Emulsionströpfchen wird der Größe der zu verkapselnden Feststoffpartikel angepaßt.

Bei Polyadditionen in Miniemulsionen, insbesondere in osmotisch stabilisierten Emulsionen, kann eine effiziente Einbettung von Feststoffpartikeln in die Hülle von Polyadditionsprodukten erreicht werden. Vorzugsweise werden mindestens 60%, besonders bevorzugt mindestens 80%, noch stärker bevorzugt mindestens 90% und am meisten bevorzugt mindestens 95% der Feststoffpartikel eingebettet. Die durch Polyaddition erhaltenen Dispersionen können homogen verfilmt werden, wobei die resultierenden Filme eine hohe mechanische Stabilität und Säureresistenz aufweisen. Aufgrund der homogenen Verkapselung können die resultierenden Nanohybridpartikel beispielsweise für Farben oder Beschichtungen mit einer hohen coloristischen Effizienz eingesetzt werden.

Der Nachweis der Einkapselung von Feststoffpartikeln in die Partikel des Polyadditionsproduktes kann mit Hilfe von Transmissions-Elektronenmikroskopie oder/und Ultrazentrifugation erfolgen.

Weiterhin soll die Erfindung durch die nachfolgenden Abbildungen und Beispiele erläutert werden. Es zeigt:

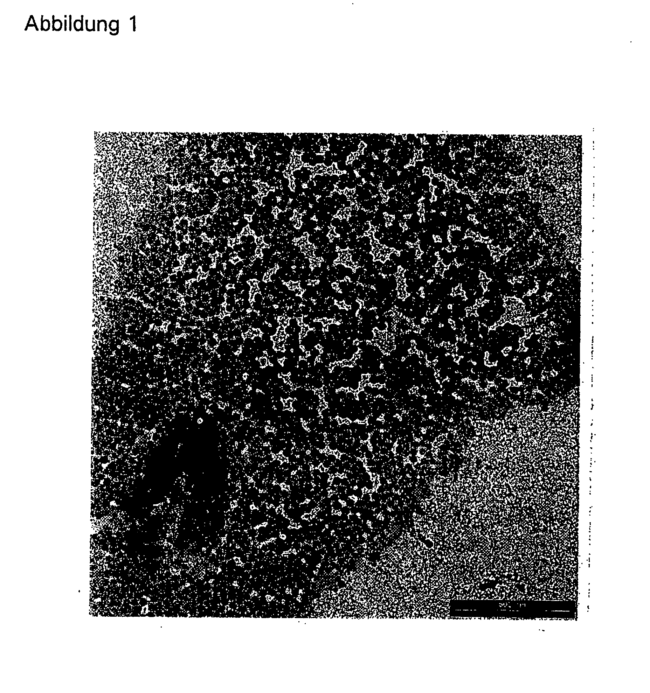

- Abbildung 1:: eine elektronenmikroskopische Aufnahme eines durch Polyaddition von Epikote E828 und 4,4'-Diaminodibenzyl hergestellten Latex.

### Beispiele

### Beispiel 1

6 g eines Monomomergemisches aus Epikote E828 und Jeffamin D2000 (Strukturen siehe Tabelle 1) im molaren Verhältnis 2:1 wurden zu einer Lösung aus 1g Natriumdodecylsulfat (Tensid) und 40 g Wasser gegeben und für 1 h bei höchster Magnetrührerstufe gerührt. Die Mischung wurde für 2 min bei 110 bis 115 W mit einem Ultraschaltstab (Branson Sonifier W450 Digital, Amplitude 90%) miniemulgiert. Durch Temperaturerhöhung auf 60°C wurde die Reaktion gestartet. Die Reaktionsdauer betrug 12 h. Es wurde eine stabile Dispersion eines Amin-Epoxid-Polyadditionsprodukts erhalten.

Die Messung der Partikelgröße erfolgte unter Verwendung eines Nicomp Particle Sizer (Modell 370, PSS, Santa Barbara, USA) bei einem festgelegten Streuwinkel von 90°. Die Molekulargewichte der Polymere wurden durch GPC-Analyse bestimmt, die mit einer P1000-Pumpe und einem UV1000-Detektor (Thermo Separation Products) bei einer Wellenlänge von 260 nm mit 5 µm 8 x 300 mm SDV Säulen mit 10⁶, 10⁵ bzw. 10³ Angström (Polymer Standard Service) in THF mit einer Fließrate von 1 ml/min bei 30°C durchgeführt wurde. Die Berechnung der Molekulargewichte erfolgte anhand einer Kalibrierung relativ zu den Standards

Elektronenmikroskopische Aufnahmen wurden mit einem Zeiss/912 Omega Elektronenmikroskop bei 100 kV durchgeführt. Die verdünnten Partikeldispersionen wurden auf ein 400-Mesh-Kohlenstoff beschichtetes Kupfergrid aufgebracht und trocknen gelassen.

Durch Variation der Tensidmenge (0,1 g, 0,5 g, 2,5 g und 4,0 g Natriumdodecylsulfat) konnte die Partikelgröße der resultierenden Latexteilchen im Bereich von ca. 80 nm bis 250 nm variiert werden.

Durch Variation des Monomers (1,12-Diaminododecan) und des Tensids (Styrol/Ethylenoxid-Blockcopolymer SE3030 (Sty)₁₀-b-(EO)₂₃) konnte ebenfalls die Partikelgröße variiert werden.

Die Ergebnisse sind in Tabelle 2 zusammengefaßt.

### Beispiel 2

Entsprechend der in Beispiel 1 angegebenen Vorschrift wurden als Tenside Cetyltrimethylammoniumchlorid (CTMA-Cl), Lutensol AT50 (C₁₆H₃₃)(EO)₅₀ sowie die Styrol/Ethylenoxid-BlockcopolymerePS/PEO1000/1050 (Sty)₁₀-b-(EO)₁₁₄ und SE 1030 (Sty)₃₀-b-(EO)₂₃ anstelle von Natriumdodecylsulfat oder SE3030 verwendet. Es wurden Teilchengrößen im Bereich zwischen ca. 90 und 400 nm erhalten.

Die Ergebnisse sind in Tabelle 3 gezeigt.

### Beispiel 3

Statt eines Monomergemisches mit dem molaren Verhältnis Epoxid zu Diamin von 2:1 wurde jeweils eine Komponente im Überschuß zugegeben.
(a) Epoxid wurde im Überschuß in einem molaren Verhältnis Epoxid zu Amin von 2:1 bis 3,3:1 zugegeben.
(b) Das Amin wurde im Überschuß in einem molaren Verhältnis Epoxid zu Amin von 1:1,22 bis 1:1,5 zugegeben.

Es wurden funktionelle Polyadditionsprodukte mit freien primären Amingruppen bzw. Epoxidgruppen erhalten, die als Ausgangsprodukte für weitere Reaktionsschritte eingesetzt werden können.

Die Ergebnisse dieses Versuchs sind in Tabelle 4 A gezeigt.

Durch Ansäuerung des Latex konnte die Teilchengröße verringert werden. Die Ergebnisse sind in Tabelle 4 B gezeigt.

### Beispiel 4

Der in Beispiel 1 beschriebene Versuch wurde unter Verwendung der Amine 4,4'-Diaminodibenzyl, 1,12-Diaminododecan und 4,4'-Diaminodicyclohexylmethan (Strukturen siehe Tabelle 1) wiederholt. Es wurden Polymerdispersionen mit Teilchengrößen im Bereich von ca. 40 bis 75 nm erhalten.

Die Ergebnisse sind in Tabelle 5 gezeigt. Abbildung 1 ist eine elektronenmikroskopische Aufnahme des unter Verwendung von 4,4'-Diaminodibenzyl hergestellten Latex.

### Beispiel 5

6 g eines Monomergemisches aus Epikote E828 und Bisphenol A (Struktur siehe Tabelle 1) wurden im molaren Verhältnis von 1:1 zu einer Lösung von 1 g Natriumdodecylsulfat und 40 g Wasser gegeben und für 1 h bei höchster Magnetrührerstufe gerührt. Gemäß der in Beispiel 1 angegebenen Vorschrift wurde eine Miniemulsion hergestellt und reagieren gelassen.

Auf analoge Weise, aber unter Verwendung von 6 g eines Monomergemisches aus Epikote E828 und Hexandithiol (Struktur siehe Tabelle 1) im Verhältnis 1:1 wurde eine stabile Dispersion eines Polysulfids erhalten.

Die Ergebnisse sind in Tabelle 6 dargestellt.

### Beispiel 6

6 g eines Monomergemisches aus dem trifunktionellen Epoxid Denacol Ex-314 (Struktur siehe Tabelle 1) und Jeffamin D2000 im molaren Verhältnis von 1:1,05 und 1:1,1 wurden zu einer Lösung aus 1 g Natriumdodecylsulfat und 40 g Wasser gegeben und für 1 h bei höchster Magnetrührerstufe gerührt. Entsprechend der in Beispiel 1 beschriebenen Vorschrift wurde eine Miniemulsion hergestellt und reagieren gelassen.

Der Versuch wurde unter Verwendung des difunktionellen Epoxids Epikote E828, des tetrafunktionellen Epoxids Ex-411 sowie mit Mischungen eines di- und eines trifunktionellen Epoxids bzw. eines di- und eines tetrafunktionellen Epoxids wiederholt.

Die Ergebnisse sind in Tabelle 7 dargestellt.

### Beispiel 7

6 g eines Monomergemisches aus Isophorondiisocyanat und 1,12-Diaminododecan bzw. 4,4'-Diaminodibenzyl jeweils im molaren Verhältnis 1:1 wurden zu einer Lösung aus 1 g Natriumdodecylsulfat und 40 g Wasser gegeben und für 1 h bei höchster Magnetrührerstufe gerührt. Die Mischung wurde 2 min (bei Diaminodibenzyl 12 min) mit einer Amplitude von 90% (110 bis 115 W) mit dem bereits in Beispiel 1 verwendeten Gerät miniemulgiert. Die Reaktion wurde durch eine Temperaturerhöhung auf 60°C gestartet. Die Reaktionsdauer war 12 h.

Die Ergebnisse dieses Versuchs sind in Tabelle 8 dargestellt.

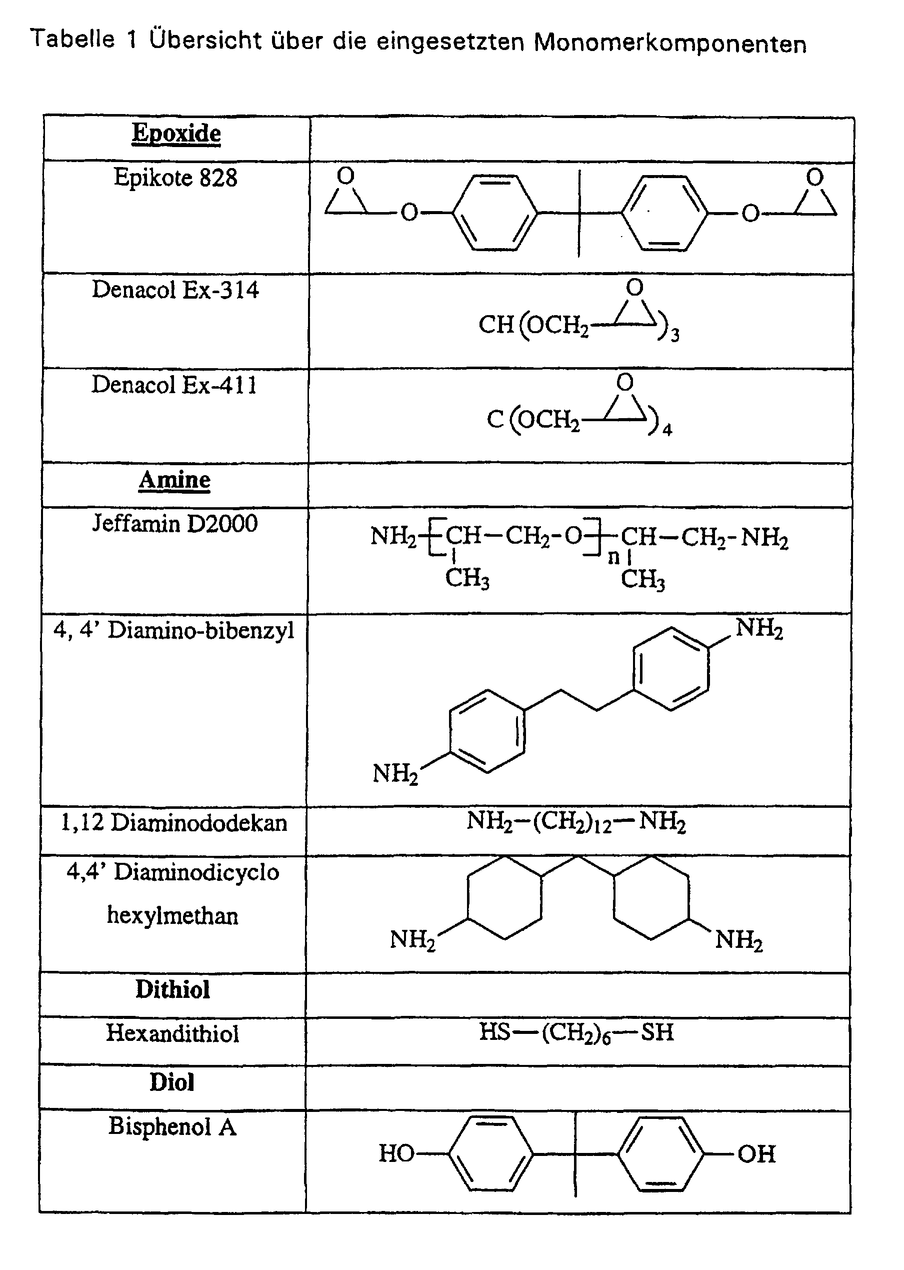

**Tabelle 2:**

| Beispiel | Monomer | Tensid [g] | | Durchmesser [nm] |
|---|---|---|---|---|
| 1 | Jeffamin D2000 | SDS | 0,1 | 245 |
| 1 | Jeffamin D2000 | SDS | 0,5 | 99 |
| 1 | Jeffamin D2000 | SDS | 1,0 | 90 |
| 1 | Jeffamin D2000 | SDS | 2,5 | 83 |
| 1 | Jeffamin D2000 | SDS | 4,0 | 160 |
| | | | | |
| 1 | 1,12-Diaminododecan | SDS | 0,05 | 816 |
| 1 | 1,12-Diaminododecan | SDS | 0,1 | 759 |
| 1 | 1,12-Diaminododecan | SDS | 0,25 | 358 |
| 1 | 1,12-Diaminododecan | SDS | 0,5 | 121 |
| 1 | 1,12-Diaminododecan | SDS | 1,5 | 36 |
| | | | | |
| 1 | Jeffamin D2000 | SE3030 | 1,25 | 193 |
| 1 | Jeffamin D2000 | SE3030 | 2,5 | 175 |
| 1 | Jeffamin D2000 | SE3030 | 3,0 | 93 |
| | | | | |
| 1 | 1,12-Diaminododecan | SE3030 | 1,25 | 143 |
| 1 | 1,12-Diaminododecan | SE3030 | 2,5 | 71 |
| 1 | 1,12-Diaminododecan | SE3030 | 3,0 | 45 |

**Tabelle 3:**

| Beispiel | Tensid [g] | | Durchmesser [nm] |
|---|---|---|---|
| 2 | CTMA-CI | 2 | 302 |
| 2 | PS/PEO 1000/5000 | 2,5 | 377 |
| 2 | Lutensol AT 50 | 2,5 | 179 |
| 2 | SE 1030 | 2,5 | 377 |

**Tabelle 4 A**

| Verhältnis Epikote E828 / Jeffamin D2000 | Tensid [g] | | Durchmesser [nm] |
|---|---|---|---|
| 2:1 | CTMA-Cl | 2,0 | 302 |
| 1:1,5 | CTMA-Cl | 2,0 | 323 |
| 3:1 | CTMA-Cl | 2,0 | 228 |
| 2:1 | SDS | 0,5 | 172 |
| 1:1,22 | SDS | 0,5 | 552 |
| 3,3:1 | SDS | 0,5 | 183 |
| 2:1 | SDS | 2,5 | 231 |
| 1:1,22 | SDS | 2,2 | 580 |
| 2,8:1 | SDS | 2,5 | 201 |

**Tabelle 4 B:**

| Verhältnis Epikote E828/ Jeffamin D2000 | Tensid [g] | | Durchmesser [nm] |
|---|---|---|---|
| 2:1 | SDS | 0,5 | 99 |
| 1:1,22 | SDS | 0,5 | 102 |
| 2:1 | SDS | 2,5 | 83 |
| 1:1,22 | SDS | 2,2 | 163 |

**Tabelle 5:**

| Monomer [g] | Tensid [g] | | Durchmesser [nm] |
|---|---|---|---|
| Jeffamin D2000 | SDS | 1,0 | 90 |
| 1,12-Diamino-dodecan | SDS | 1,5 | 36 |
| 4,4'-Diaminodicyclohexylethan | SDS | 1,5 | 39 |
| 4,4'-Diamino-dibenzyl | SDS | 1,5 | 30 |

**Tabelle 6:**

| Monomer | Tensid [g] | | Durchmesser [nm] |
|---|---|---|---|
| 1,6-Hexandithiol | SDS | 1,0 | 194 |
| Bisphenol A | SDS | 1,0 | 243 |

**Tabelle 7:**

| Epoxid/Amin | Monomer (Epoxid) | Tensid [g] | | Durchmesser [nm] |
|---|---|---|---|---|
| 2:1 | Epikote E828 | SDS | 1,0 | 83 |
| 1:1,05 | Denacol Ex-314 | SDS | 1,0 | 193 |
| 1:1,1 | Denacol-Ex314 | SDS | 1,0 | 495 |
| 1:1,05 | Denacol Ex-411 | SDS | 1,0 | 295 |
| 1:1,1 | Denacol Ex-411 | SDS | 1,0 | 158 |
| 1:2 | 1:1 Epikote E828/ Denacol Ex-411 | SDS | 1,0 | 117 |
| 1:2 | 1:1 Epikote E828/ Denacol Ex-314 | SDS | 1,0 | 74 |

**Tabelle 8:**

| Monomer (Amin) | Tensid [g] | | Durchmesser [nm] |
|---|---|---|---|
| 1,12-Diaminododecan | SDS | 1,0 | ca. 80 |
| 4,4'-Diaminodibenzyl | SDS | 1,0 | ca. 60 |

## Patentansprüche

1. Verfahren zur Durchführung von Polyadditionsreaktionen in Miniemulsionen,
**dadurch gekennzeichnet,**
**dass** man eine die monomeren Edukte der Polyadditionsreaktion enthaltende Miniemulsion mit Emulsionströpfchen mit einem mittleren Teilchendurchmesser von 20 bis 1000 nm in einem hydrophilen Medium erzeugt und dann zur Reaktion bringt.

2. Verfahren nach Anspruch 1,
**dadurch gekennzeichnet,**
**daß** die Polyadditionsreaktion eine Herstellung von Polyurethanen aus multifunktionellen Hydroxyverbindungen und multifunktionellen Isocyanaten umfaßt.

3. Verfahren nach Anspruch 1,
**dadurch gekennzeichnet,**
**daß** die Polyadditionsreaktion eine Herstellung von Polyharnstoffen aus multifunktionellen Aminoverbindungen und multifunktionellen Isocyanaten umfaßt.

4. Verfahren nach Anspruch 1,
**dadurch gekennzeichnet,**
**daß** die Polyadditionsreaktion eine Herstellung von PolyepoxidVerbindungen aus multifunktionellen Amino-, Hydroxy- oder/und Thiolverbindungen und multifunktionellen Epoxiden umfaßt.

5. Verfahren nach einem der vorhergehenden Ansprüche,
**dadurch gekennzeichnet,**
**daß** man eine Miniemulsion einer dispersen Öiphase in einer kontinuierlichen Phase, insbesondere einer wässrigen Phase bildet.

6. Verfahren nach einem der vorhergehenden Ansprüche,
**dadurch gekennzeichnet,**
**daß** man ein oberflächenaktives Tensid zugibt.

7. Verfahren nach einem der vorhergehenden Ansprüche,
**dadurch gekennzeichnet,**
**daß** zusätzlich eine hydrophobe inerte Substanz in das System eingebracht wird.

8. Verfahren nach Anspruch 7,
**dadurch gekennzeichnet,**
**daß** die hydrophobe Substanz in einer Menge von 0,1-40 Gew.-% bezogen auf das Gesamtgewicht der Emulsion eingesetzt wird.

9. Verfahren nach einem der vorhergehenden Ansprüche,
**dadurch gekennzeichnet,**
**daß** die mittlere Teilchengröße der Emulsion im Bereich von 30 bis 600 nm liegt.

10. Verfahren nach einem der vorhergehenden Ansprüche,
**dadurch gekennzeichnet,**
**daß** eine Emulsion erzeugt wird, die kritisch stabilisiert oder thermodynamisch stabil gegenüber einer Änderung der Teilchengröße ist.

11. Verfahren nach einem der vorhergehenden Ansprüche,
**dadurch gekennzeichnet,**
daßdie Emulsion weiterhin darin dispergierte Feststoffpartikel enthält.

12. Verfahren nach einem der vorhergehenden Ansprüche,
**dadurch gekennzeichnet,**
**daß** die Polyadditionsreaktion ohne wesentliche Änderung der Teilchengröße erfolgt.

## Claims

1. Process for carrying out polyaddition reactions in miniemulsions,
**characterized in that**
a miniemulsion containing monomeric educts of the polyaddition reaction with emulsion droplets having an average particle diameter of 20 to 1000 nm is produced in a hydrophilic medium and is then reacted.

2. Process as claimed in claim 1,
**characterized in that**
the polyaddition reaction comprises a production of polyurethanes from multifunctional hydroxy compounds and multifunctional isocyanates.

3. Process as claimed in claim 1,
**characterized in that**
the polyaddition reaction comprises a production of polyureas from multifunctional amino compounds and multifunctional isocyanates.

4. Process as claimed in claim 1,
**characterized in that**
the polyaddition reaction comprises a production of polyepoxide compounds from multifunctional amino, hydroxy or/and thiol compounds and multifunctional epoxides.

5. Process as claimed in one of the previous claims,
**characterized in that**
a miniemulsion of a disperse oil phase is formed in a continuous phase and especially in an aqueous phase.

6. Process as claimed in one of the previous claims,
**characterized in that**
a surface-active surfactant is added.

7. Process as claimed in one of the previous claims,
**characterized in that**
a hydrophobic inert substance is additionally introduced into the system.

8. Process as claimed in claim 7,
**characterized in that**
the hydrophobic substance is used in an amount of 0.1 - 40 % by weight based on the total weight of the emulsion.

9. Process as claimed in one of the previous claims,
**characterized in that**
the average particle size of the emulsion is in the range of 30 to 600 nm.

10. Process as claimed in one of the previous claims,
**characterized in that**
an emulsion is produced which is critically stabilized or is thermodynamically stable towards a change in the particle size.

11. Process as claimed in one of the previous claims,
**characterized in that**
the emulsion additionally contains solid particles that are dispersed therein.

12. Process as claimed in one of the previous claims
**characterized in that**
the polyaddition reaction takes place without a substantial change in the particle size.

## Revendications

1. Procédé pour réaliser des réactions de polyaddition en mini-émulsion, **caractérisé en ce que** l'on produit une mini-émulsion contenant les réactifs monomères de la réaction de polyaddition avec des gouttelettes d'émulsion ayant un diamètre moyen des particules allant de 20 à 1000 nm dans un milieu hydrophile et que l'on fait réagir.

2. Procédé selon la revendication 1, **caractérisé en ce que** la réaction de polyaddition comprend la préparation de polyuréthannes à partir de composés hydroxylés polyfonctionnels et d'isocyanates polyfonctionnels.

3. Procédé selon la revendication 1, **caractérisé en ce que** la réaction de polyaddition comprend la préparation de polyurées à partir de composés amino polyfonctionnels et d'isocyanates polyfonctionnels.

4. Procédé selon la revendication 1, **caractérisé en ce que** la réaction de polyaddition comprend la préparation de composés polyépoxyde à partir de composés amino, hydroxyle et/ou thiol polyfonctionnels et d'époxydes polyfonctionnels.

5. Procédé selon l'une quelconque des revendications précédentes, **caractérisé en ce que** l'on forme une mini-émulsion d'une phase huileuse dispersée dans une phase continue, en particulier une phase aqueuse.

6. Procédé selon l'une quelconque des revendications précédentes, **caractérisé en ce que** l'on ajoute un tensioactif.

7. Procédé selon l'une quelconque des revendications précédentes, **caractérisé en ce que** l'on incorpore en outre, une substance inerte hydrophobe dans le système.

8. Procédé selon la revendication 7, **caractérisé en ce que** la substance hydrophobe est mise en oeuvre en une quantité allant de 0,1 à 40% en poids, sur base du poids total de l'émulsion.

9. Procédé selon l'une quelconque des revendications précédentes, **caractérisé en ce que** la granulométrie moyenne de l'émulsion se situe dans l'intervalle allant de 30 à 600 nm.

10. Procédé selon l'une quelconque des revendications précédentes, **caractérisé en ce que** l'on produit une émulsion qui est stabilisée de manière critique ou qui est thermodynamiquement stable par rapport à une modification de la granulométrie.

11. Procédé selon l'une quelconque des revendications précédentes, **caractérisé en ce que** l'émulsion contient des particules de matière solide y dispersées.

12. Procédé selon l'une quelconque des revendications précédentes, **caractérisé en ce que** la réaction de polyaddition est réalisée sans modification essentielle de la granulométrie.
